# EUROPEAN PATENT SPECIFICATION

(11) **EP 4 310 976 B1**
(45) Date of publication and mention of the grant of the patent: **04.11.2026**
(21) Application number: 22894192.8
(22) Date of filing: 24.05.2022
(51) Int. Cl.: H01M 10/0567, H01M 10/0525, H01M 10/052, H01M 10/0568, H01M 10/0569, H01M 10/42

(54) **NON-AQUEOUS ELECTROLYTE SOLUTION AND HIGH-VOLTAGE LITHIUM BATTERY CONTAINING SAME**
NICHTWÄSSRIGE ELEKTROLYTLÖSUNG UND LITHIUM-HOCHSPANNUNGSBATTERIE DAMIT
SOLUTION D'ÉLECTROLYTE NON AQUEUSE ET BATTERIE AU LITHIUM À HAUTE TENSION LA CONTENANT

(30) Priority: 22.11.2021 CN 202111385766
(43) Date of publication of application: 24.01.2024
(73) Proprietor: Zhangjiagang Guotai-Huarong New Chemical Materials Co., Ltd, Suzhou, Jiangsu 215600 (CN)
(72) Inventor: CHEN, Xiaoqin, Suzhou, Jiangsu 215600 (CN); SHI, Erbo, Suzhou, Jiangsu 215600 (CN); GAN, Chaolun, Suzhou, Jiangsu 215600 (CN); HUI, Yinyin, Suzhou, Jiangsu 215600 (CN); ZHANG, Li, Suzhou, Jiangsu 215600 (CN); SUN, Cao, Suzhou, Jiangsu 215600 (CN)
(74) Representative: Bryers Intellectual Property Ltd
(86) International application number: PCT/CN2022/094633
(87) International publication number: WO 2023/087648

(56) References cited:
- EP-A1- 2 672 560
- CN-A- 1 322 027
- CN-A- 103 427 115
- JP-A- 2001 256 995
- JP-A- 2002 100 399
- JP-A- 2002 110 234
- JP-A- 2013 239 426
- JP-A- 2013 239 426
- US-B1- 6 479 191

## Description

### Technical Field of the Invention

The present disclosure belongs to the field of lithium battery technology, and particularly, relates to a non-aqueous electrolyte and a high voltage lithium battery comprising the same.

### Background of the Invention

With the development of emerging consumption fields such as mobile phones, tablet computers, smart wearables, and ETC, lithium-ion batteries have shown great advantages due to their high energy density and long cycle life. However, with the continuous diversification of corresponding device functions and the increasing power consumption of power modules, conventional lithium-ion batteries are no longer able to meet the user's usage needs. In order to improve the user experience, the development direction of lithium-ion batteries has become increasingly clear, which is to maximize energy density or achieve fast charging under safe conditions. To increase the energy density, the industry is currently mainly developing from three aspects. One is to seek new material systems, such as cathode materials such as lithium cobalt oxide, lithium-rich manganese-based cathode materials, ternary high-nickel cathode materials, and anode materials such as silicon carbon; the second is to increase the charge cutoff voltage of existing materials, such as lithium cobalt oxide batteries above 4.4 V, ternary batteries above 4.4 V, etc; the third is to change the battery process, increase the surface density and compaction density, or use thinner fluid collectors, tape, aluminum plastic shells, and etc.. On the other hand, in order to further shorten the charging time and reach the rated electric quantity as soon as possible, fast charging lithium-ion batteries have emerged, from charging at 0.2 C initially to the later charging at 2 C, and even charging at 5 C.

In the digital field that requires high volume energy density, the design concept of lithium batteries is to use high-voltage lithium cobalt oxide and silicon carbon anodes. The voltage of commercial lithium cobalt oxide has gradually increased from 4.2 V to 4.48 V, which has brought some negative effects, for example, the presence of dangling bonds and unsaturated coordination relationships on the material surface can significantly increase its reaction activity compared to the bulk phase. When charging lithium cobalt oxide batteries, the following reaction processes will occur: (1) The cathode material starts to delithiate from the surface; (2) After delithiation occurs, the oxygen atoms in the Li layer lose their barrier and produce repulsion, resulting in unstable surface structure; (3) The continuous delithiation promotes the surface lattice activity to occur the gas overflow; (4) The overflow of gas causes surface Co atoms to become less stable and dissolve; (5) Dissolved high-valent Co elements also oxidize the electrolyte and participate in electrolyte chemical reactions. The solid-liquid interface side reaction is an unavoidable problem in the development of lithium batteries, the chemical window of non-aqueous organic electrolytes currently used is usually lower than 4.4 V, when the charge cut-off voltage is higher than 4.4 V, the electrolytes will undergo oxidative decomposition on the surface of the battery, and this process leads to the capacity of the battery to "dive" sharply. At the same time, the products of oxidative decomposition also cover the surface of the electrode material, increasing the internal resistance of the battery. The boundary between surface side reaction products catalyzed by free transition metal elements poses a hidden danger to the electrode material to maintain a high level of activity.

Meanwhile, as the SVHC list gets wider, many sulfur-containing compounds are likely to be restricted later. In the previous research, we developed a non-aqueous electrolyte and lithium battery that are sulfur free and have excellent cycling performance and high-temperature storage performance, as detailed in patent CN112510259A. However, with the deepening of the research, we found that when the voltage of the lithium battery in patent CN112510259A is gradually increased to 4.5 V and above, the high-temperature performance and discharge performance decline, and the safety performance decreases.

Therefore, it is necessary to further improve the performance of electrolyte and lithium battery based on patent CN112510259A, so that high-temperature performance and discharge performance under high voltage conditions can be taken into account while having excellent high-temperature storage performance and cycling performance without the use of sulfur-containing additives.

JP2013239426A discloses a non-aqueous electrolyte comprising dipropargyl carbonate.

### Summary of the Invention

It is an object of the present disclosure to provide a non-aqueous electrolyte capable of improving the high-temperature performance and discharge performance of a lithium battery at high voltages.

It is another object of the present disclosure to provide a high-voltage lithium battery comprising the above-mentioned non-aqueous electrolyte.

In order to realize the above objects, a technical solution adopted in the present disclosure is as follows:
A first aspect of the present disclosure provides a non-aqueous electrolyte comprising a lithium salt, an organic solvent and additives, the additives comprising an additive **A** and an additive B,
the additive **A** is selected from the group consisting of substances represented by the following structural general formula (1) and combinations thereof: 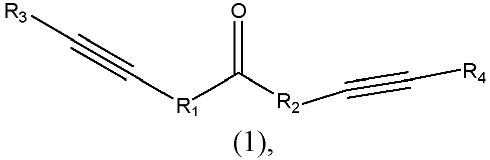
wherein, R₁ and R₂ are the same, and R₁ and R₂ are alkylene, fluoroalkylene, alkyleneoxy, or fluoroalkyleneoxy; R₃ and R₄ are the same, and R₃ and R₄ are hydrogen, alkyl, alkyloxy, fluoroalkyl or fluoroalkyloxy;
the additive **B** is a boron-containing lithium salt;
the additive **B** is selected from the group consisting of lithium difluoro(oxalate) borate, lithium bis(oxalate)borate, and combinations thereof;
the mass of the additive **B** accounts for 0.5%-1.5% of the total mass of the non-aqueous electrolyte.

Preferably, R₁ and R₂ are selected from the group consisting of alkylene, fluoroalkylene, alkyleneoxy or fluoroalkyleneoxy with 1 - 3 carbon atoms; R₃ and R₄ are selected from the group consisting of hydrogen, and alkyl or fluoroalkyl with 1 - 5 carbon atoms.

Preferably, R₁ and R₂ are selected from the group consisting of alkylene with 1 - 3 carbon atoms, and R₃ and R₄ are selected from the group consisting of hydrogen, and alkyl with 1 - 5 carbon atoms; or R₁ and R₂ are selected from the group consisting of alkyleneoxy with 1 - 3 carbon atoms, and R₃ and R₄ are selected from the group consisting of hydrogen, and alkyl with 1 - 5 carbon atoms.

According to some implementations, the additive **A** is selected from the group consisting of hepta-1,6-diyne-4-one 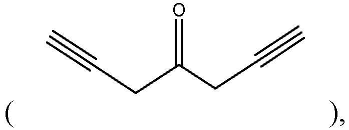 dipropargyl carbonate 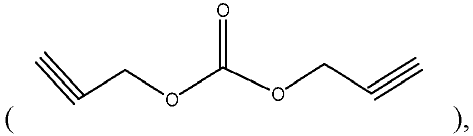 di(2-butynyl) carbonate ( 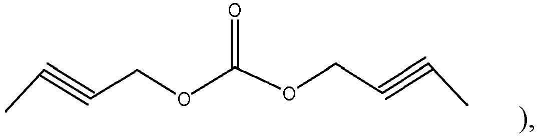 di(3-butynyl) carbonate ( 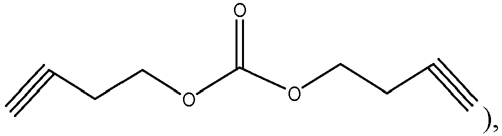 and combinations thereof.

Preferably, the mass of the additive **A** accounts for 0.01 - 5 %, further preferably 0.1 - 3%, more preferably 0.3 - 2% of the total mass of the non-aqueous electrolyte.

Further preferably, the mass ratio of the additive **A** to the additive **B** is 1: (0.5 - 3).

Preferably, the organic solvent is a mixture of cyclic ester and chain ester, the cyclic ester is selected from the group consisting of γ-butyrolactone (GBL), ethylene carbonate (EC), propylene carbonate (PC), fluoroethylene carbonate (FEC), and combinations thereof; the chain ester is selected from the group consisting of dimethyl carbonate (DMC), ethyl methyl carbonate (EMC), diethyl carbonate (DEC), methyl propyl carbonate (MPC), methyl propionate (MP), ethyl propionate (EP), propyl propionate (PP), methyl acetate (MA), ethyl acetate (EA), propyl acetate (PA), methyl butyrate (MB), ethyl butyrate (EB), propyl butyrate (PB), methyl fluoropropionate (FMP), propyl fluoropropionate, ethyl fluoropropionate, ethyl fluoroacetate, ethylene glycol monopropyl ether (EP), and combinations thereof.

Further preferably, the organic solvent is a mixture of ethylene carbonate (EC), propylene carbonate (PC), ethylene glycol monopropyl ether (EP), and propyl propionate (PP).

Further preferably, the volume ratio of ethylene carbonate (EC), propylene carbonate (PC), ethylene glycol monopropyl ether (EP) and propyl propionate (PP) is (1 - 3): (0.5 - 1.5): (1 - 5): (3 - 6).

Preferably, the lithium salt is selected from the group consisting of lithium hexafluorophosphate (LiPF₆), lithium hexafluoroarsenate (LiAsF₆), anhydrous lithium perchlorate (LiClO₄), lithium bis(trifluoromethanesulfonyl)imide (LiN(SO₂CF₃)₂), lithium difluorobis(oxalate)phosphate (LiPF₂(C₂O₄)₂), lithium difluorophosphate (LiPO₂F₂), lithium trifluoromethanesulfonate (LiSO₃CF₃), lithium difluorobisoxalate phosphate (LiPOsC₄F₂), lithium oxalyldifluoroborate, lithium bisfluorosulfonyl imide (LiN(SO₂F)₂), and combinations thereof.

Preferably, the concentration of the lithium salt is 0.8 - 1.5 mol/L, further preferably 1 - 1.5 mol/L, more further preferably 1 - 1.3 mol/L.

Preferably, the additives comprise another additive, and the another additive is selected from the group consisting of vinylene carbonate, vinylethylene carbonate, biphenyl, cyclohexylbenzene, trioctyl phosphate, fluoroethylene carbonate, succinonitrile, adiponitrile, 1,3,6-hexanetricarbonitrile, 1,2-bis(2-cyanoethoxy) ethane, 1,4-dicyano-2-butene, 1,2,3-tris(2-cyanoethoxy) propane, sebaconitrile, and combinations thereof.

Further preferably, the mass of the another additive accounts for 5 - 25 %, further preferably 5 - 20% of the total mass of the non-aqueous electrolyte.

Further preferably, the another additive is succinonitrile, fluoroethylene carbonate and 1,3,6-hexanetricarbonitrile, the mass of succinonitrile accounts for 1 - 5% of the total mass of the non-aqueous electrolyte, the mass of fluoroethylene carbonate accounts for 2 - 8% of the total mass of the non-aqueous electrolyte, and the mass of 1,3,6- hexanetricarbonitrile accounts for 2 - 6% of the total mass of the non-aqueous electrolyte.

A second aspect of the present disclosure provides a high-voltage lithium battery comprising a cathode, an anode and an electrolyte, the electrolyte is the above-mentioned non-aqueous electrolyte.

Due to the utilization of the above technical solution, the present disclosure has the following advantages over the prior art:
The present disclosure has found through research that the addition of additives represented by the structural general formula (1) ensures the high-temperature performance and cycling performance of lithium battery under conventional voltage, and at the same time, when the voltage is increased to 4.5 V or even higher, the lithium battery still have excellent high-temperature performance and discharge performance, which ensures the safety and electrochemical performance of the high-voltage lithium battery.

Further preferably, through the compounding of the carboxylate derivative additives represented by the structural general formula (1) and the boron-containing lithium salt additives, combined with the synergistic cooperation of the other components of the non-aqueous electrolyte, while ensuring the high-temperature performance and the cycling performance of the lithium battery under the conventional voltage, the lithium battery is able to have a more excellent high-temperature performance and discharge performance, and a more excellent safety performance and electrochemical performance, when the voltage is increased to 4.5V or even higher.

### Detailed Description of Exemplary Embodiments

In the previous research, we developed a non-aqueous electrolyte and lithium battery that are sulfur free and have excellent cycling performance and high-temperature storage performance, as detailed in patent CN112510259A. However, with the deepening of the research, we found that when the voltage of the lithium battery in patent CN112510259A is gradually increased to 4.5V and above, the high-temperature performance and discharge performance decline, and the safety performance decreases.

Therefore, it is necessary to further improve the performance of electrolyte and lithium battery based on patent CN112510259A, so that excellent high-temperature performance and discharge performance under high voltage conditions can be taken into account while having excellent high-temperature storage performance and cycling performance without the use of sulfur-containing additives.

The inventors, after extensive research, propose a non-aqueous electrolyte which, by adding additive **A** to the electrolyte, can enable the battery to have excellent high temperature storage performance and cycling performance without the use of sulfur-containing additives and at the same time have excellent high temperature performance and discharge performance at high voltages.

Wherein, the additive **A** is selected from the group consisting of substances represented by the following structural general formula (1) and combinations thereof: 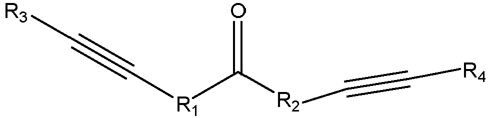 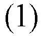 wherein, R₁ and R₂ are the same, and R₁ and R₂ are alkylene, fluoroalkylene, alkyleneoxy, or fluoroalkyleneoxy; R₃ and R₄ are the same, and R₃ and R₄ are hydrogen, alkyl, alkyloxy, fluoroalkyl or fluoroalkyloxy.

The inventors further found that by adding the additive **A** and a boron-containing lithium salt to the electrolyte, and through the adjustment of the compounding ratio and the optimization with other components in the electrolyte, the high-temperature performance of the battery as well as the discharge performance are further improved under high-voltage conditions, and the safety is higher.

In the following, the present disclosure is further described combining with specific embodiments. However, the present disclosure is not limited to these embodiments. The implementation conditions employed by the embodiments may be further adjusted according to particular requirements, and undefined implementation conditions usually are conditions in conventional experiments. The technical features involved in the respective implementations of the present disclosure can be combined with each other if they do not conflict with each other.

The reagents and the like used in the following embodiments and comparative examples are commercially available.

### Comparative Example 1:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 0.1 wt% hepta-1,6-diyne-4-one were respectively added to the mixed solution to give an electrolyte.

### Comparative Example 2:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 0.5 wt% hepta-1,6-diyne-4-one were respectively added to the mixed solution to give an electrolyte.

### Comparative Example 3:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 1 wt% hepta-1,6-diyne-4-one were respectively added to the mixed solution to give an electrolyte.

### Comparative Example 4:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 2 wt% hepta-1,6-diyne-4-one were respectively added to the mixed solution to give an electrolyte.

### Comparative Example 5:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 0.5 wt% dipropargyl carbonate were respectively added to the mixed solution to give an electrolyte.

### Comparative Example 6:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 0.5 wt% di(2-butynyl) carbonate were respectively added to the mixed solution to give an electrolyte.

### Comparative Example 7:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 0.5 wt% di(3-butynyl) carbonate were respectively added to the mixed solution to give an electrolyte.

### Comparative Example 8:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution to give an electrolyte.

### Comparative Example 9:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, and 3 wt% 1,3,6-hexanetricarbonitrile were respectively added to the mixed solution to give an electrolyte.

### Comparative Example 10:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 0.5 wt% propargyl acetate were respectively added to the mixed solution to give an electrolyte.

### Embodiment 1:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% hepta-1,6-diyne-4-one, and 0.5 wt% lithium difluoro(oxalate) borate were respectively added to the mixed solution to give an electrolyte.

### Embodiment 2:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% hepta-1,6-diyne-4-one, and 1 wt% lithium difluoro(oxalate) borate were respectively added to the mixed solution to give an electrolyte.

### Embodiment 3:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% hepta-1,6-diyne-4-one, and 1.5 wt% lithium difluoro(oxalate) borate were respectively added to the mixed solution to give an electrolyte.

### Embodiment 4:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% dipropargyl carbonate, and 0.5 wt% lithium difluoro(oxalate) borate were respectively added to the mixed solution to give an electrolyte.

### Comparative Example 11:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% dipropargyl carbonate, and 0.5 wt% lithium tetrafluoroborate were respectively added to the mixed solution to give an electrolyte.

### Embodiment 5:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% dipropargyl carbonate, and 0.5 wt% lithium bis(oxalate)borate were respectively added to the mixed solution to give an electrolyte.

### Comparative Example 12:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% dipropargyl carbonate, and 0.5 wt% lithium triphenyl-n-butylborate were respectively added to the mixed solution to give an electrolyte.

### Comparative Example 13:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% dipropargyl carbonate, and 0.5 wt% lithium trimethylimidazolium tetrafluoroborate were respectively added to the mixed solution to give an electrolyte.

### Comparative Example 14:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, and 0.5 wt% lithium difluoro(oxalate) borate were respectively added to the mixed solution to give an electrolyte.

### Comparative Example 15:

In an argon-filled glove box (H₂O content < 10 ppm), ethylene carbonate (EC), propylene carbonate (PC), ethylene glycol monopropyl ether (EP) and propyl propionate (PP) were mixed well at a volume ratio of 2:1:3:4, and 1.2 mol/L LiPF₆ was added to the mixed solution, then 2 wt% succinonitrile, 4 wt% fluoroethylene carbonate, 3 wt% 1,3,6-hexanetricarbonitrile, 0.5 wt% propargyl acetate, and 0.5 wt% lithium difluoro(oxalate) borate were respectively added to the mixed solution to give an electrolyte.

The electrolytes prepared from the above-mentioned Embodiments and Comparative Examples were assembled into lithium cobalt oxide/graphite batteries, respectively. The capacity retention rate and battery bulging rate of the above-mentioned lithium cobalt oxide/graphite batteries after being stored at a high temperature of 85 °C for 4 hours were tested. The test data is shown in Table 1. The testing method was as follows: charging the batteries at 1 C to 4.5 V at 25 °C and under the condition of constant current/constant voltage (CC/CV), and placing them in an oven at 85 °C for 4 hours, then discharging the batteries at 1 C to 3.0 V respectively, and testing the capacity and battery thickness of the batteries after being stored at a high temperature of 85 °C for 4 hours; testing the capacity and battery thickness of the above-mentioned batteries after charging under the same conditions and discharging under the same conditions without high-temperature storage. The capacity retention rate of the above-mentioned batteries after being stored at 85 °C for 4 hours was equal to the capacity after being stored at 85 °C for 4 hours divided by the capacity without being stored at high temperatures. The battery bulging rate of the above-mentioned batteries after being stored at 85 °C for 4 hours was equal to "the difference between the thickness of the battery after storage and the thickness of the battery before storage" divided by the thickness of the batteries before storage. The capacity retention rate after 200 cycles at 45 °C and Direct-Current Resistance (DCR) at 50% State Of Charge (SOC) and 2 C for 10 s of the above-mentioned lithium cobalt oxide/graphite batteries were tested, respectively; wherein, the capacity retention rate of the above lithium cobalt oxide/graphite batteries after 200 cycles at 45 °C was tested as follows: charging the batteries at 1 C to 4.5 V at 45 °C and under the condition of constant current/constant voltage (CC/CV), and then discharging the batteries at 1 C to 3.0 V, testing the capacity of the batteries after the initial charge and discharge and the capacity of the batteries after 200 cycles of cyclic charge and discharge, respectively, and the capacity retention rate after 200 cycles at 45 °C was equal to the capacity of the batteries after 200 cycles of cyclic charge/discharge divided by the capacity of the batteries after the initial charge and discharge; the DCR at 50% SOC and 2 C for 10 s was tested as follows: in the 50% SOC charging state of the batteries, testing the ratio of the voltage difference between the voltages before and after discharging at a constant current of 2 C for 10 s to the current; the relevant experimental data are shown in Table 1.

**Table 1**

| | Capacity retention rate after 4 H of high-temperature storage at 85 °C (%) | Battery bulging rate after 4 H of high-temperature storage at 85 °C (%) | Capacity retention rate after 200 cycles at 45 °C (%) | |
|---|---|---|---|---|
| Comparative Example 1 | 85.1 | 2.32 | 80.5 | 24.5 |
| Comparative Example 2 | 88.4 | 1.98 | 82.3 | 26.4 |
| Comparative Example 3 | 87.2 | 1.31 | 83.4 | 28.9 |
| Comparative Example 4 | 83.2 | 1.54 | 80.6 | 30.2 |
| Comparative Example 5 | 86.5 | 2.31 | 81.6 | 27.9 |
| Comparative Example 6 | 85.4 | 2.46 | 82.1 | 26.4 |
| Comparative Example 7 | 84.7 | 2.39 | 81.9 | 25.8 |
| Comparative Example 8 | 54.5 | 20.2 | 47.1 | 45.2 |
| Comparative Example 9 | 60.3 | 15.9 | 55.2 | 32.2 |
| Comparative Example 10 | 85.4 | 8.21 | 79.2 | 41.3 |
| Embodiment 1 | 91.0 | 0.69 | 91.7 | 23.1 |
| Embodiment 2 | 91.5 | 0.73 | 90.4 | 24.4 |
| Embodiment 3 | 88.9 | 1.32 | 91.4 | 25.1 |
| Embodiment 4 | 92.7 | 0.65 | 92.5 | 20.5 |
| Comparative Example 11 | 91.5 | 0.46 | 91.7 | 21.1 |
| Embodiment 5 | 92.4 | 0.53 | 92.1 | 20.9 |
| Comparative Example 12 | 91.4 | 0.71 | 92.3 | 21.4 |
| Comparative Example 13 | 91.0 | 0.69 | 91.4 | 21.6 |
| Comparative Example 14 | 88.8 | 5.68 | 90.2 | 25.4 |
| Comparative Example 15 | 89.2 | 7.68 | 90.8 | 35.6 |

As can be seen from the comparison of Comparative Examples 1 - 7 with Comparative Examples 8 - 9, the present application, by adding the additive A to the electrolyte, has led to an improvement in the high-temperature storage performance and capacity retention rate at high temperatures, and has led to a decrease in the high-temperature bulging rate and DCR of the batteries. Again, as can be seen from the comparison of Comparative Examples 1 - 7 with Comparative Example 10, compared to propargyl acetate, the use of the additive **A** in the battery electrolytes is able to significantly reduce battery gas generation as well as significantly reduce battery resistance while having comparable or better high-temperature storage performance and high-temperature capacity retention rate.

Again, as can be seen from the comparison of Comparative Examples 1 - 7 with Embodiments 1 - 5, Comparative Examples 11-13, the compounding and use of the additive **A** and the boron-containing lithium salt additives can further improve the capacity retention rate of the batteries after 4 H of high-temperature storage at 85 °C and the cycle capacity retention rate of the batteries after 200 cycles at 45 °C under the condition of 4.5 V, and can further reduce the battery bulging rate (%) after 4 H of high-temperature storage at 85 °C and the DCR at 50% SOC and 2 C for 10 s of the batteries under the condition of 4.5 V. It shows that the compounding of the additive **A** and a boron-containing lithium salt additive can further improve the high-temperature performance and discharge performance of the batteries, and the safety performance can also be further improved.

## Claims

1. A non-aqueous electrolyte comprising a lithium salt, an organic solvent, and additives, **characterized in that,** the additives comprise an additive **A** and an additive **B,**
the additive **A** is selected from the group consisting of substances represented by the following structural general formula (1) and combinations thereof: 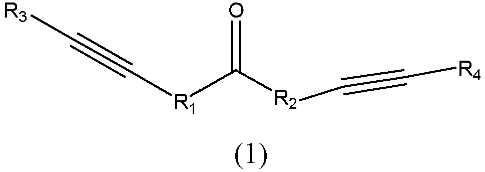
wherein, R₁ and R₂ are the same, and R₁ and R₂ are alkylene, fluoroalkylene, alkyleneoxy, or fluoroalkyleneoxy; R₃ and R₄ are the same, and R₃ and R₄ are hydrogen, alkyl, alkyloxy, fluoroalkyl or fluoroalkyloxy;
the additive **B** is a boron-containing lithium salt;
the additive **B** is selected from the group consisting of lithium difluoro(oxalate) borate, lithium bis(oxalate)borate, and combinations thereof;
the mass of the additive **B** accounts for 0.5%-1.5% of the total mass of the non-aqueous electrolyte.

2. The non-aqueous electrolyte according to claim 1, **characterized in that,** R₁ and R₂ are selected from the group consisting of alkylene, fluoroalkylene, alkyleneoxy or fluoroalkyleneoxy with 1 - 3 carbon atoms; R₃ and R₄ are selected from the group consisting of hydrogen, and alkyl or fluoroalkyl with 1 - 5 carbon atoms.

3. The non-aqueous electrolyte according to claim 1, **characterized in that,** the additive **A** is selected from the group consisting of hepta-1,6-diyne-4-one, dipropargyl carbonate, di(2-butynyl) carbonate, di(3-butynyl) carbonate, and combinations thereof.

4. The non-aqueous electrolyte according to claim 1, **characterized in that,** the mass of the additive **A** accounts for 0.01 - 5% of the total mass of the non-aqueous electrolyte.

5. The non-aqueous electrolyte according to claim 1, **characterized in that,** the organic solvent is a mixture of cyclic ester and chain ester, the cyclic ester is selected from the group consisting of γ-butyrolactone, ethylene carbonate, propylene carbonate, fluoroethylene carbonate, and combinations thereof; the chain ester is selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, methyl fluoropropionate, propyl fluoropropionate, ethyl fluoropropionate, ethyl fluoroacetate, ethylene glycol monopropyl ether, and combinations thereof.

6. The non-aqueous electrolyte according to claim 1, **characterized in that,** the lithium salt is selected from the group consisting of lithium hexafluorophosphate, lithium hexafluoroarsenate, lithium perchlorate, lithium bis(trifluoromethanesulfonyl)imide, lithium difluorobis(oxalate)phosphate, lithium difluorophosphate, lithium trifluoromethanesulfonate, lithium difluorobisoxalate phosphate, lithium oxalyldifluoroborate, lithium bisfluorosulfonyl imide, and combinations thereof;and/or, the concentration of the lithium salt is 0.8 - 1.5 mol/L.

7. The non-aqueous electrolyte according to claim 1, **characterized in that,** the additives comprise another additive, and the another additive is selected from the group consisting of vinylene carbonate, vinylethylene carbonate, biphenyl, cyclohexylbenzene, trioctyl phosphate, fluoroethylene carbonate, succinonitrile, adiponitrile, 1,3,6-hexanetricarbonitrile, 1,2-bis(2-cyanoethoxy) ethane, 1,4-dicyano-2-butene, 1,2,3-tris(2-cyanoethoxy) propane, sebaconitrile, and combinations thereof.

8. The non-aqueous electrolyte according to claim 7, **characterized in that,** the mass of the another additive accounts for 5 - 25% of the total mass of the non-aqueous electrolyte.

9. A high-voltage lithium battery comprising a cathode, an anode and an electrolyte, **characterized in that,** the electrolyte is the non-aqueous electrolyte according to any one of claims 1 - 8.

## Patentansprüche

1. Nicht-wässriger Elektrolyt, umfassend ein Lithiumsalz, ein organisches Lösungsmittel und Additive, **dadurch gekennzeichnet, dass** die Additive ein Additiv **A** und ein Additiv **B** umfassen,
wobei das Additiv A aus der Gruppe ausgewählt wird, die aus Substanzen, die durch die folgende allgemeine Strukturformel (1) repräsentiert werden, und Kombinationen davon besteht: 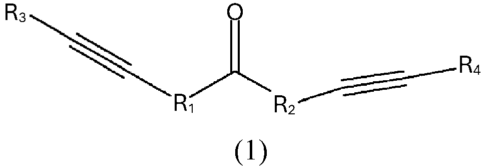
wobei R₁ und R₂ gleich sind und R₁ und R₂ Alkylen, Fluoralkylen, Alkylenoxy oder Fluoralkylenoxy sind; R₃ und R₄ gleich sind und R₃ und R₄ Wasserstoff, Alkyl, Alkyloxy, Fluoralkyl oder Fluoralkyloxy sind;
das Additiv **B** ein borhaltiges Lithiumsalz ist;
das Additiv **B** aus der Gruppe ausgewählt wird, die aus Lithiumdifluor(oxalato)borat, Lithiumbis(oxalato)borat und Kombinationen davon besteht;
die Masse des Additivs **B** 0,5 %-1,5 % der Gesamtmasse des nicht-wässrigen Elektrolyten ausmacht.

2. Nicht-wässriger Elektrolyt nach Anspruch 1, **dadurch gekennzeichnet, dass** R₁ und R₂ aus der Gruppe ausgewählt werden, die aus Alkylen, Fluoralkylen, Alkylenoxy oder Fluoralkylenoxy mit 1 - 3 Kohlenstoffatomen besteht; R₃ und R₄ aus der Gruppe ausgewählt werden, die aus Wasserstoff und Alkyl oder Fluoralkyl mit 1 - 5 Kohlenstoffatomen besteht.

3. Nicht-wässriger Elektrolyt nach Anspruch 1, **dadurch gekennzeichnet, dass** das Additiv **A** aus der Gruppe ausgewählt wird, die aus Hepta-1,6-diin-4-on, Dipropargylcarbonat, Di(but-2-inyl)carbonat, Di(but-3-inyl)carbonat und Kombinationen davon besteht.

4. Nicht-wässriger Elektrolyt nach Anspruch 1, **dadurch gekennzeichnet, dass** die Masse des Additivs **A** 0,01 - 5 % der Gesamtmasse des nicht-wässrigen Elektrolyten ausmacht.

5. Nicht-wässriger Elektrolyt nach Anspruch 1, **dadurch gekennzeichnet, dass** das organische Lösungsmittel ein Gemisch aus zyklischem Ester und Kettenester ist, wobei der zyklische Ester aus der Gruppe ausgewählt wird, die aus γ-Butyrolacton, Ethylencarbonat, Propylencarbonat, Fluorethylencarbonat und Kombinationen davon besteht; wobei der Kettenester aus der Gruppe ausgewählt wird, die aus Dimethylcarbonat, Ethylmethylcarbonat, Diethylcarbonat, Methylpropylcarbonat, Methylpropionat, Ethylpropionat, Propylpropionat, Methylacetat, Ethylacetat, Propylacetat, Methylbutyrat, Ethylbutyrat, Propylbutyrat, Methylfluorpropionat, Propylfluorpropionat, Ethylfluorpropionat, Ethylfluoracetat, Ethylenglycolmonopropylether und Kombinationen davon besteht.

6. Nicht-wässriger Elektrolyt nach Anspruch 1, **dadurch gekennzeichnet, dass** das Lithiumsalz aus der Gruppe ausgewählt wird, die aus Lithiumhexafluorphosphat, Lithiumhexafluorarsenat, Lithiumperchlorat, Lithiumbis(trifluormethansulfonyl)-imid, Lithiumdifluorbis(oxalato)phosphat, Lithiumdifluorphosphat, Lithiumtrifluormethansulfonat, Lithiumdifluorbisoxalatophosphat, Lithiumoxalyldifluorborat, Lithiumbisfluorsulfonylimid und Kombinationen davon besteht, und/oder dass die Konzentration des Lithiumsalzes 0,8 - 1,5 mol/l beträgt.

7. Nicht-wässriger Elektrolyt nach Anspruch 1, **dadurch gekennzeichnet, dass** die Additive ein weiteres Additiv umfassen und dass das weitere Additiv aus der Gruppe ausgewählt wird, die aus Vinylencarbonat, Vinylethylencarbonat, Biphenyl, Cyclohexylbenzen, Trioctylphosphat, Fluorethylencarbonat, Bernsteinsäurenitril, Adiponitrile, 1,3,6-Hexantricarbonitril, 1,2-bis(2-cyanethoxy)ethan, 1,4-Dicyanbut-2-en, 1,2,3-tris(2-cyanethoxy)propan, Decandinitril und Kombinationen davon besteht.

8. Nicht-wässriger Elektrolyt nach Anspruch 7, **dadurch gekennzeichnet, dass** die Masse des weiteren Additivs A 5 - 25 % der Gesamtmasse des nicht-wässrigen Elektrolyten ausmacht.

9. Hochspannungs-Lithiumbatterie, umfassend eine Kathode, eine Anode und einen Elektrolyten, **dadurch gekennzeichnet, dass** der Elektrolyt der nicht-wässrige Elektrolyt nach einem der Ansprüche 1 - 8 ist.

## Revendications

1. Électrolyte non aqueux comprenant un sel de lithium, un solvant organique et des additifs, **caractérisé en ce que** les additifs comprennent un additif **A** et un additif **B**,
l'additif **A** étant choisi dans le groupe constitué de substances représentées par la formule structurelle générale suivante (1) et des combinaisons de celle-ci : 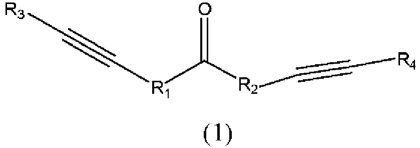
dans laquelle R₁ et R₂ sont identiques, et R₁ et R₂ sont alkylène, fluoroalkylène, alkylèneoxy, ou fluoroalkylèneoxy ; R₃ et R₄ identiques, et R₃ et R₄ sont hydrogène, alkyle, alkyloxy, fluoroalkyle ou fluoroalkyloxy ;
l'additif **B** étant un sel de lithium contenant du bore ;
l'additif **B** étant choisi dans le groupe constitué de difluoro(oxalate) borate de lithium, bis (oxalate)borate de lithium et des combinaisons de ceux-ci ;
le poids de l'additif **B** représentant 0,5 % à 1,5 % du poids total de l'électrolyte non aqueux.

2. Électrolyte non aqueux selon la revendication 1, **caractérisé en ce que** R₁ et R₂ sont choisis dans le groupe constitué d'alkylène, fluoroalkylène, alkylèneoxy ou fluoroalkylèneoxy avec 1 à 3 atomes de carbone ; R₃ et R₄ sont choisis dans le groupe constitué d'hydrogène, alkyle ou fluoroalkyle avec 1 à 5 atomes de carbone.

3. Électrolyte non aqueux selon la revendication 1, **caractérisé en ce que** l'additif **A** est choisi dans le groupe constitué de hepta-1,6-diyne-4-one, carbonate de dipropargyle, carbonate de di(2-butinyle), carbonate de di(3-butinyle), et des combinaisons de ceux-ci.

4. Électrolyte non aqueux selon la revendication 1, **caractérisé en ce que** le poids de l'additif **A** représente 0,01 % à 5 % du poids total de l'électrolyte non aqueux.

5. Électrolyte non aqueux selon la revendication 1, **caractérisé en ce que** le solvant organique est un mélange d'ester cyclique et d'ester linéaire, l'ester cyclique étant choisi dans le groupe constitué de γ-butyrolactone, carbonate d'éthylène, carbonate de propylène, carbonate de fluoroéthylène, et des combinaisons de ceux-ci ; l'ester linéaire étant choisi dans le groupe constitué de carbonate de diméthyle, carbonate d'éthyle méthyle, carbonate de diéthyle, carbonate de méthyle propyle, propionate de méthyle, propionate d'éthyle, propionate de propyle, acétate de méthyle, acétate d'éthyle, acétate de propyle, butyrate de méthyle, butyrate d'éthyle, butyrate de propyle, fluoropropionate de méthyle, fluoropropionate de propyle, fluoropropionate d'éthyle, fluoroacétate d'éthyle, éther monopropylique d'éthylène glycol, et des combinaisons de ceux-ci.

6. Électrolyte non aqueux selon la revendication 1, **caractérisé en ce que** le sel de lithium est choisi dans le groupe constitué de hexafluorophosphate de lithium, hexafluoroarsénate de lithium, perchlorate de lithium, bis(trifluorométhanesulfonyl)imide de lithium, difluorobis(oxalate)phosphate de lithium, difluorophosphate de lithium, trifluorométhanesulfonate de lithium, difluorobisoxalate phosphate de lithium, oxalyldifluoroborate de lithium, bisfluorosulfonyl imide de lithium, et des combinaisons de ceux-ci ; et/ou la concentration du sel de lithium est entre 0,8 et 1,5 mol/L.

7. Électrolyte non aqueux selon la revendication 1, **caractérisé en ce que** les additifs comprennent un autre additif, et l'autre additif est choisi dans le groupe constitué de carbonate de vinylène, carbonate de vinyléthylène, biphényle, cyclohexylbenzène, phosphate de trioctyle, carbonate de fluoroéthylène, succinonitrile, adiponitrile, 1,3,6-hexanetricarbonitrile, 1,2-bis(2-cyanoéthoxy)-éthane,1,4-dicyano-2-butène, 1,2,3-tris(2-cyanoéthoxy)-propane, sébaconitrile, et des combinaisons de ceux-ci.

8. Électrolyte non aqueux selon la revendication 7, **caractérisé en ce que** le poids de l'autre additif représente 5 % à 25 % du poids total de l'électrolyte non aqueux.

9. Batterie haute tension au lithium comprenant une cathode, une anode et un électrolyte, **caractérisé en ce que** l'électrolyte est l'électrolyte non aqueux selon l'une quelconque des revendications 1 à 8.
